**Europäisches Patentamt**

**European Patent Office**

**Office européen des brevets**

(19)

(11) Numéro de publication: **0 258 164**
**A1**

## (12) DEMANDE DE BREVET EUROPEEN

(21) Numéro de dépôt: **87440026.0**

(22) Date de dépôt: **12.05.87**

(51) Int. Cl.⁴: **G 06 F 1/00**
**B 60 P 3/00**

(30) Priorité: **30.05.86 FR 8607927**

(43) Date de publication de la demande:
**02.03.88 Bulletin 88/09**

(84) Etats contractants désignés:
**AT BE CH DE ES GB GR IT LI LU NL SE**

(71) Demandeur: **De Weck, Arnaud**
**55 Avenue Jean Moulin**
**F-75014 Paris (FR)**

**Guerin, Xavier**
**Plaisance**
**F-28120 Illiers-Combray (FR)**

(72) Inventeur: **De Weck, Arnaud**
**55 Avenue Jean Moulin**
**F-75014 Paris (FR)**

**Guerin, Xavier**
**Plaisance**
**F-28120 Illiers-Combray (FR)**

(74) Mandataire: **Bossard, Jacques-René**
**Cabinet MEYER & COURTASSOL Bureau EUROPE 20**
**Place des Halles**
**F-67000 Strasbourg (FR)**

Le titre de l'invention a été modifié (Directives relatives à l'examen pratiqué à l'OEB, A-III, 7.3)

(54) **Installation mobile destinée au dépannage des centres informatiques.**

(57) Installation mobile destinée au dépannage des centres informatiques, caractérisé en ce qu'elle constitue une 'salle blanche" consistant dans la combinaison d'un véhicule et d'un équipement au moyen duquel ledit véhicule respecte les contraintes du cahier des charges d'une salle informatique.

Fig.1

**EP 0 258 164 A1**

**0 258 164**

**Description**

SALLE BLANCHE

La présente invention concerne au titre de produit industriel nouveau un véhicule de type en soi généralement connu, mais comportant un équipement le rendant apte à rendre des services qui n'avaient jamais été proposés à ce jour.

Ce véhicule ainsi équipé peut être désigné par l'expression "salle blanche mobile", et il permet de mettre à tout moment et en tous lieux à la disposition d'un utilisateur une enceinte appropriée à l'exploitation immédiate d'un ordinateur.

On sait que l'environnement dans lequel est implanté un ordinateur doit respecter des contraintes très sévères, notamment en ce qui concerne la température, l'hygrométrie, l'absence de toute pollution atmosphérique. Ainsi, à titre d'exemple, on peut rappeler que pour un ordinateur de modèle courant, les contraintes de climatisation du local sont les suivantes :
Dissipation calorifique : 25 300 kCal:h
Conditions à maintenir dans l'ambiance de la salle

| Ordinateur | Température | Hygrométrie | Filtration |
|---|---|---|---|
| – en service | 22°C+ 2°C | 50% + 5% | 90% de 3 microns |
| – à l'arrêt | 15 à 32°C | 40 à 70% | 90% de 3 microns |
| – Gradient | 3°C/h | 5%/h | |

Coupure alimentation ordinateur : 27°C.

Au surplus un tel local doit impérativement comporter un double plancher dans l'espace libre duquel sont logés tous les cablages et conduits divers, notamment ceux assurant la climatisation. Un tel double plancher doit permettre l'accès à cet espace, et être en même temps parfaitement stable.

Il est en principe prévu dans les entreprises utilisant des ordinateurs de conserver disponible en permanence un local dans lequel ces contraintes sont respectées, de manière à pouvoir accueillir un ordinateur de dépannage dans le cas où l'ordinateur normalement en service se trouve momentanément hors d'usage, à la suite d'une destruction physique (incendie, explosion, inondation), ou en raison d'une isolation géographique, de mouvements sociaux, ou encore pendant une période de changement ou de test de matériel.

Un tel ordinateur de dépannage permet alors à l'entreprise de poursuivre son activité dans des conditions normales non perturbées.

En fait, dans la réalité quotidienne, ces "salles blanches", qui sont donc des salles d'ordinateurs sans ordinateur, apparaissent rapidement comme des locaux inoccupés et sont détournés de leur destination première, pour y loger des bureaux ou des archives, de sorte qu'elles cessent d'être disponibles pour le moment où elles deviennent nécessaires, et ne remplissent donc plus leur rôle.

La présente invention permet de remédier à cette situation, en proposant une "salle blanche mobile", c'est-à-dire un véhicule équipé de manière à constituer un local respectant toutes les contraintes d'une salle blanche conventionnelle, et pouvant être amené à la disposition d'un utilisateur occasionnel, sur simple demande quels que soient le moment le lieu où le besoin se manifeste. La salle blanche mobile est alors louée à l'utilisateur, pour permettre le dépannage requis pendant la période nécessaire.

Dans la pratique, le véhicule porteur est de préférence du type camion semi-remorque, dont la plus grande partie de la remorque est conçue de manière à pouvoir, à l'arrêt, se déployer de manière à constituer le local proprement dit, tandis que dans la portion avant sont logés les équipements assurant le respect des contraintes précitées, à savoir, une batterie électrique, un onduleur, un système de climatisation, les tableaux de commande et analogues.

Une première réalisation d'une telle remorque consiste à monter le long de ses deux côtés longitudinaux des panneaux se repliant l'un sur l'autre pour permettre les déplacements du véhicule en respectant les normes d'encombrement usuelles, et se déployant à l'arrêt pour former successivement, de chaque côté, un toit, un double plancher et une cloison longitudinale externe, l'ensemble de chaque volume ainsi déplié reposant alors sur des béquilles. Le principe de tels véhicules est utilisé par exemple par les boutiques foraines ou certaines caravanes de camping.

Selon une second réalisation, chacun des deux volumes en question constitue une galerie latérale qui se loge à l'intérieur de la remorque pendant les déplacements et qui se déplace à l'extérieur pour doubler le volume de remorque à l'arrêt ; un tel type de véhicule à volume variable équipe actuellement par exemple les bibliothèques itinérantes, les centres de transfusion sanguine et analogues.

Bien entendu, bien que le principe du véhicule dans ces deux réalisations ne soit pas nouveau en soi, son application à la création de "salles blanches mobiles", par adaptation de sa construction et son association aux moyens techniques appropriés est entièrement nouvelle.

Ainsi, le local ainsi créé, reposant à l'arrêt sur des béquilles, présente la stabilité requise. Il comporte des prises de branchement sur les sources d'énergie extérieure. Sa carrosserie est bien entendu isotherme et son

2

équipement de climatisation a la même efficacité que pour un local fixe. Il comporte le double faux plancher pour recevoir les cablages de l'ordinateur. Ce local respecte dont intégralement le cahier des charges d'une salle informatique classique.

A titre d'exemple d'illustration on va décrire schématiquement une réalisation de l'invention, en se référant au dessin annexé, sur lequel :

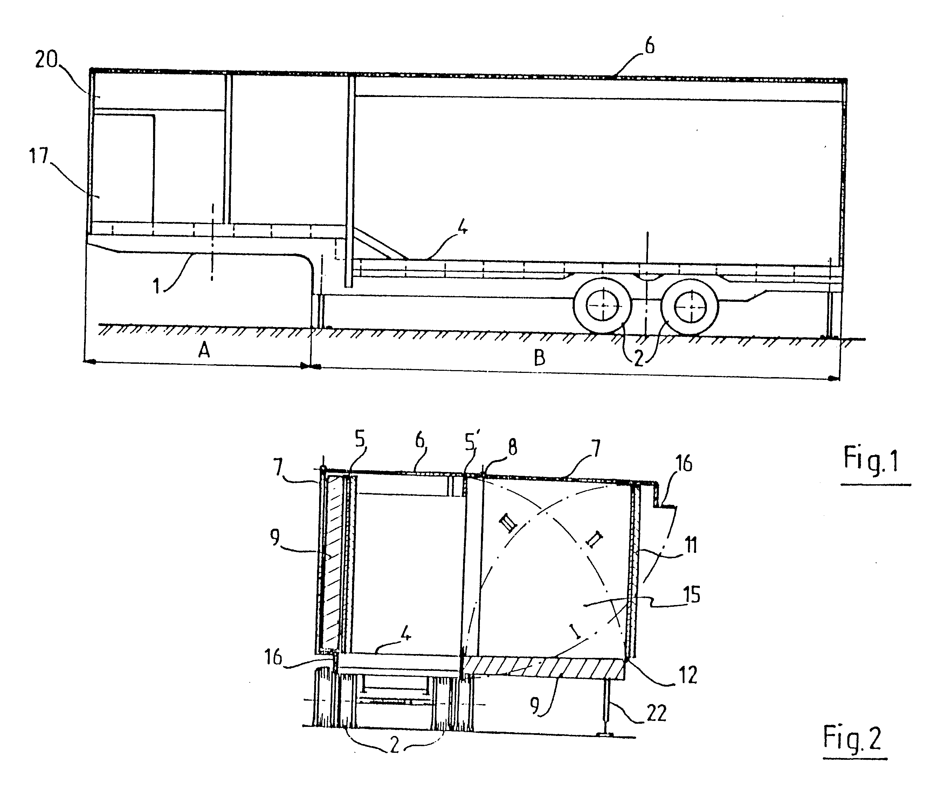

La figure 1 est une vue de côté d'une remorque transformable en salle blanche selon l'invention.

La figure 2 est une vue de dessus de cette remorque, l'un des côtés étant replié et l'autre déplié, et

La figure 3 est une coupe verticale suivant III-III de la figure 2.

Sur ce dessin on représenté une semi-remorque de type général connu, se composant d'un chassis 1 définissant une portion avant A destinée à venir s'accrocher au véhicule tracteur, et une portion arrière B, roulant sur les roues 2.

Selon l'invention, la portion B se compose d'un volume de base 3 formé d'un double plancher fixe 4, de deux parois longitudinales 55', et d'un toit 6. Entre le plancher 4 et le toit 6, se replient de chaque côté d'une part un panneau extérieur 7, articulé sur le bord extérieur 8 du toit 6, d'autre part un double plancher 9, articulé sur le bord extérieur 10 du plancher 4 et une cloison 11, articulée sur le bord extérieur 12 du plancher 9.

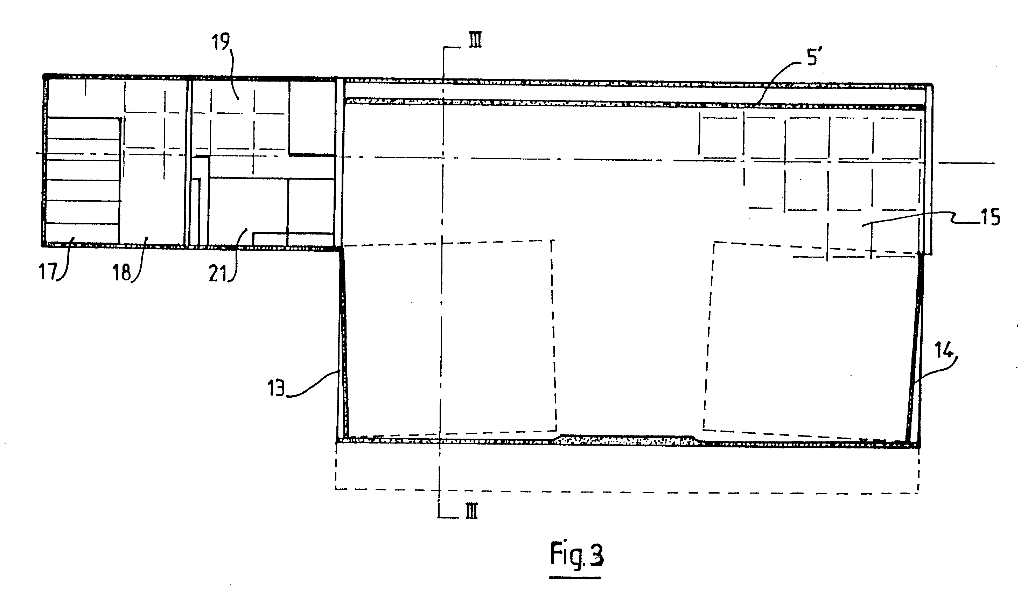

Des cloisons extrêmes 13-14 complètent le volume 15 ainsi formé de chaque côté. Comme on le voit mieux sur la figure 3, ce système de dépliage triple pratiquement le volume 3 de la remorque de base. On notera que le rebord extérieur 16 du panneau 7 forme une cornière qui assure la fermeture des panneaux repliés au-dessus des roues 2.

Par ailleurs la portion A, qui n'est pas dépliable, contient toutes les installations annexes assurant le fonctionnement de l'ordinateur qui sera accueilli dans la portion B :
- batterie 17
- ondulateur 18
- climatiseur 19
- ventilateur 20
- panneaux de commande 21,
dont les cablages, connexions et conduits divers sont logés dans les doubles planchers 4 et 9.

On notera que les panneaux latéraux 11 peuvent être réalisés en plusieurs portions amovibles, de manière à pouvoir disposer en communication deux ou plusieurs unités semblables côté à côte, en créant ainsi des volumes encore plus importants. Bien entendu, le nombre de béquilles telles que 22 nécessaires pour assurer la stabilité de l'ensemble seront réparties sous les portions en porte-à-faux.

Les avantages d'une telle "salle blanche mobile" sont multipliés :

a) Pour l'utilisateur :
- elle pallie l'inconvénient du détournement de l'utilisation normale de la salle blanche obligatoire dans l'entreprise, ce qui, en fait libère un local dans l'entreprise,
- elle ne sert qu'en cas de besoin, c'est-à-dire que les frais de son entretien n'apparaissent que pour les périodes de dépannage,
- elle est immédiatement disponible, aussi bien près du site de traitement habituel qu'en un lieu au contraire éloigné pour des raisons de confidentialité,
- plusieurs remorques peuvent être assemblées pour constituer des salles de diverses dimensions.

b) et pour le prestataire du service, le passage d'un utilisateur à un autre assure une exploitation pratiquement continue du matériel, qui peut d'ailleurs être programmée en fonction des besoinis non imprévus on accidentels des utilisateurs.

## Revendications

1. Installation mobile destinée au dépannage des centres informatiques, caractérisé en ce qu'elle constitue une "salle blanche mobile" consistant dans la combinaison d'un véhicule et d'un équipement au moyen duquel ledit véhicule respecte les contraintes du cahier des charges d'une salle informatique.

2. Installation selon la revendication 1, caractérisée en ce que le véhicule est du type semi-remorque comportant des galeries déployables latéralement.

3. Instalaltion selon les revendications 1 et 2, caractérisée en ce que la salle est réalisée par l'association de plusieurs véhicules semblables.

4. Installation selon les revendications 1 et 2, caractérisée en ce que la salle peut être adaptée à des containers et des baraques de chantier.

0258164

Fig.1

Fig.2

PLJ I/2

Fig. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | NATIONAL BUREAU OF STANDARDS, vol. 38, no. 9, septembre 1954, pages 135,136; "The new NBS electronic computer"<br>--- | 1 | G 06 F 1/00<br>B 60 P 3/00 |
| A | FR-A-2 347 230 (POURTIER)<br>* Figures 4,5 *<br>--- | 2 | |
| A | FR-A-2 318 761 (LEUVIELLE)<br>* Figure 2 *<br>--- | 3 | |
| A | FR-A-2 151 552 (LEUVIELLE)<br>--- | | |
| A | US-A-4 181 347 (CLARK) | | |
| | ----- | | **DOMAINES TECHNIQUES RECHERCHES (Int. Cl.4)**<br><br>G 06 F<br>B 60 P |

Le présent rapport de recherche a été établi pour toutes les revendications

| Lieu de la recherche | Date d'achèvement de la recherche | Examinateur |
|---|---|---|
| LA HAYE | 31-08-1987 | SCHMITTER J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82